# FASCICULE DE BREVET EUROPEEN

(11) **EP 1 631 793 B1**
(45) Date de publication et mention de la délivrance du brevet: **12.12.2007**
(21) Numéro de dépôt: 04767320.7
(22) Date de dépôt: 10.06.2004
(51) Int. Cl.: G01D 5/245, B62D 15/02

(54) **DETERMINATION DE LA POSITION ANGULAIRE ABSOLUE D'UN VOLANT PAR DISCRIMINATION DE SEQUENCES BINAIRES**
BESTIMMUNG DER ABSOLUTEN WINKELPOSITION EINES LENKRADS DURCH BINÄRSEQUENZ-DISKRIMINATION
DETERMINATION OF THE ABSOLUTE ANGULAR POSITION OF A STEERING WHEEL BY BINARY SEQUENCES DISCRIMINATION

(30) Priorité: 11.06.2003 FR 0307002; 11.06.2003 FR 0307000
(43) Date de publication de la demande: 08.03.2006
(73) Titulaire: SNR ROULEMENTS, F-74010 Annecy Cedex (FR)
(72) Inventeur: DESBIOLLES, Pascal, F-74570 Thorens-Glières (FR); DURET, Christophe, F-74600 Quintal (FR)
(74) Mandataire: Bredema
(86) Numéro de dépôt international: PCT/FR2004/001455
(87) Numéro de publication internationale: WO 2004/111577

(56) Documents cités:
- EP-A- 0 353 995
- EP-A- 1 403 622
- DE-A- 4 142 457
- FR-A- 2 829 986
- US-B1- 6 459 389

## Description

L'invention concerne un procédé de détermination de la position angulaire absolue du volant de direction d'un véhicule automobile par rapport au châssis dudit véhicule.

Dans de nombreuses applications, notamment telles que les systèmes de contrôle de trajectoire ou les systèmes de direction assistée électrique, il est nécessaire de connaître la position angulaire absolue du volant de direction par rapport au châssis.

On entend par position angulaire absolue l'angle séparant la position du volant à un instant donné, d'une position de référence, cette position de référence étant fixe et donnée par rapport au châssis.

Par opposition, la position angulaire relative est l'angle séparant la position du volant d'une position initiale quelconque et variable par rapport au châssis.

Pour déterminer la position angulaire absolue du volant de direction, il est connu d'utiliser la mesure de la vitesse différentielle des roues d'un même essieu. En effet, il est possible d'établir une relation bijective entre cette vitesse différentielle et la position angulaire puisque, lorsque le véhicule est inscrit dans une trajectoire, rectiligne ou curviligne, chacune des roues a une trajectoire dont le centre de courbure est identique. Un des problèmes qui se pose est que la position angulaire absolue est alors obtenue avec une précision médiocre qui dépend des conditions de roulage du véhicule.

Par ailleurs, on connaît des dispositifs de mesure incrémentale de la position angulaire du volant qui permettent d'obtenir la position angulaire relative du volant avec une grande précision. Toutefois, pour obtenir la position angulaire absolue, il est alors nécessaire de prévoir la détermination d'au moins une position angulaire de référence. Une telle stratégie est par exemple décrite dans le document EP-1 167 927. Une limitation de tels dispositifs est que la détection de la position angulaire de référence n'est possible qu'une seule fois par tour, ce qui, dans certaines conditions de roulage, peut conduire à une détermination de la position angulaire absolue qu'après un temps, et donc une distance parcourue par le véhicule, non négligeable.

On connaît enfin du document EP-1 403 622 non publié à la date de dépôt de la présente demande, un système de détermination de la position angulaire absolue du volant de direction qui comprend :
- un codeur destiné à être mis en rotation conjointement au volant, ledit codeur comprenant une piste multipolaire principale et une piste multipolaire dite « top tour » qui sont concentriques, ladite piste top tour comprenant M singularités réparties angulairement ;
- un capteur fixe disposé en regard et à distance d'entrefer du codeur, comprenant un circuit électronique apte à délivrer deux signaux digitaux de position A, B carrés en quadrature qui sont représentatifs de la position angulaire du codeur et un signal top tour C sous forme de M impulsions par tour du codeur, dans lequel les M singularités sont réparties angulairement de sorte que le signal top tour C soit agencé pour, en combinaison avec les signaux A et B, définir un motif binaire comprenant des séquences binaires uniques représentatives chacune d'au moins une position angulaire absolue du codeur ;
- un dispositif de traitement des signaux A, B, C qui comprend des moyens de comptage aptes à déterminer, à partir d'une position initiale, les variations de la position angulaire du codeur ; et
- un dispositif d'analyse de la vitesse différentielle des roues d'un même essieu du véhicule qui est apte à déterminer une estimation de la position angulaire absolue du volant en fonction de ladite vitesse différentielle.

Ce document prévoit, lors de la détection d'une séquence binaire unique, de recaler la position angulaire relative issue des signaux A et B de sorte à obtenir la position angulaire absolue.

Une limitation de cette utilisation du système est que le recalage est effectué après la détection d'une séquence binaire unique complète, ce qui nécessite une rotation du volant suffisamment importante, typiquement comprise entre 30° et 75° suivant la position initiale. Par conséquent, il reste des situations de roulage dans lesquelles le recalage n'est pas effectué de façon suffisamment rapide. En particulier tel est le cas, pour un démarrage du véhicule en ligne droite, lors d'une microcoupure du calculateur à vitesse élevée (100 - 130 km/h sur autoroute par exemple), ou pour un démarrage du véhicule dans une courbe à très fort rayon de courbure ne nécessitant pas de rotation du volant supérieure à +/- 20° par exemple.

Le dispositif décrit dans le document US6459389 montre un codeur qui est à la fois incrémental et absolu (par rapport à une rotation du volant). Le codeur comprend deux pistes multipolaires, dont une piste donne un signal de la position précise (codeur incrémental) et l'autre piste donne un signal qui définit un motif binaire comprenant des séquences binaires uniques sur un secteur de tour (codeur absolu). Le domaine angulaire de 0 à 360 degrés du volant est déterminé en utilisant la vitesse de véhicule.

L'invention vise à résoudre les limitations mentionnées ci-dessus en proposant notamment un procédé de détermination de la position angulaire absolue du volant de direction qui permet, dans toutes les conditions de roulage, de déterminer ladite position de façon plus rapide et avec une précision optimale.

A cet effet, l'invention propose un procédé de détermination de la position angulaire absolue θ du volant de direction d'un véhicule automobile par rapport au châssis dudit véhicule, au moyen d'un système comprenant :
- un codeur mis en rotation conjointement au volant, ledit codeur comprenant une piste multipolaire principale et une piste multipolaire dite « top tour » (1b) qui sont concentriques, ladite piste top tour comprenant M singularités réparties angulairement;
- un capteur fixe disposé en regard et à distance d'entrefer du codeur, comprenant un circuit électronique apte à délivrer deux signaux digitaux de position A, B carrés en quadrature qui sont représentatifs de la position angulaire du codeur et un signal top tour C sous forme de M impulsions par tour du codeur, dans lequel les M singularités correspondantes sont réparties angulairement de sorte que le signal top tour C soit agencé pour, en combinaison avec les signaux digitaux de position A, B, définir un motif binaire comprenant des séquences binaires uniques sur un tour ou sur un secteur de tour qui sont représentatives chacune d'une position angulaire absolue du codeur sur le tour ou sur le secteur ;
- un dispositif de traitement des signaux A, B, C qui comprend des moyens de comptage aptes à déterminer, à partir d'une position initiale, les variations de la position angulaire du codeur ;
- un dispositif d'analyse de la vitesse différentielle des roues d'un même essieu du véhicule qui est apte à déterminer une estimation de la position angulaire absolue du volant en fonction de ladite vitesse différentielle;
Ledit procédé comprenant la procédure initiale prévoyant de :
- déterminer au moins une estimation θ* de la position angulaire absolue du volant au moyen du dispositif d'analyse ;
- construire la séquence binaire correspondant aux signaux A, B, C délivrés ;
- déterminer si la séquence binaire est unique ;
- si oui, tester si une estimation θ* permet de discriminer la position angulaire absolue du codeur dans le cas où la séquence binaire est unique sur un secteur et de discriminer la position angulaire absolue du volant θ₂ qui correspond à la séquence binaire unique ;
- si non, tester si une estimation θ* permet de discriminer la position angulaire absolue θ₃ du volant qui correspond à la séquence binaire ;

Dans lequel une estimation θ* est utilisée en tant que position angulaire absolue θ avant la détermination des positions angulaires θ₂ et θ₃, puis, lorsqu'une des positions angulaires θ₂ ou θ₃ est disponible, utiliser ladite position angulaire en tant que position angulaire initiale θ₀ pour déterminer, à partir de cette position initiale, les variations de la position angulaire absolue θ au moyen des signaux digitaux de position A, B.

D'autres objets et avantages de l'invention apparaîtront au cours de la description qui suit, faite en référence aux dessins annexés, dans lesquels :
- la figure 1 est une vue de face du codeur d'un système de détermination utilisable selon l'invention, ledit codeur comprenant une piste multipolaire principale et une piste multipolaire top tour ;
- la figure 2 est une vue schématique et partielle d'un ensemble de direction pour véhicule automobile, qui est équipé d'un système de détermination de la position angulaire absolue du volant;
- la figure 3 représente l'algorithme d'un mode de réalisation de la procédure initiale d'un procédé de détermination suivant l'invention ;
- la figure 4 représente l'algorithme d'un mode de réalisation de la procédure de calibration utilisable dans un procédé selon l'invention.

L'invention concerne un procédé de détermination de la position angulaire absolue θ du volant de direction 2 d'un véhicule automobile par rapport au châssis dudit véhicule au moyen d'un système comprenant un codeur 1 mis en rotation conjointement au volant 2 et un capteur fixe 5 apte à détecter les impulsions issues du codeur 1. Le procédé peut être mis en oeuvre dans un calculateur hôte prévu à cet effet, implanté dans un calculateur dédié du véhicule ou intégré au capteur.

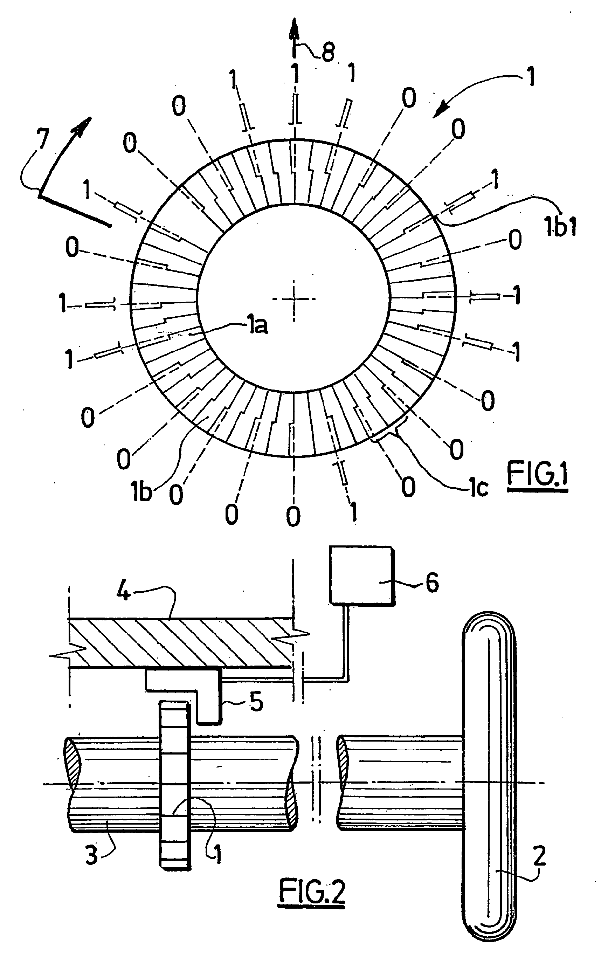

En relation avec la figure 2, on décrit un ensemble de direction comprenant une colonne de direction 3 sur lequel est monté un codeur 1 tel que celui représenté sur la figure 1, de sorte à assurer la solidarisation en rotation de la colonne 3 et du codeur 1. De façon connue, la colonne 3 est associée au volant de direction 2 par l'intermédiaire duquel le conducteur applique un couple et donc un angle de braquage. Par ailleurs, la colonne 3 est agencée pour transmettre cet angle de braquage aux roues de direction du véhicule. A cet effet, les roues peuvent être associées mécaniquement à la colonne 3 par l'intermédiaire d'un pignon de crémaillère et d'une crémaillère afin de transformer le mouvement de rotation de la colonne 3 en déplacement angulaire des roues, ou être découplées de la colonne 3. Dans ce dernier cas, le codeur 1 peut être associé directement à une partie du volant 2.

Le volant 2 est agencé pour pouvoir effectuer une pluralité de tours, typiquement deux, de chaque coté de la position « ligne droite » dans laquelle les roues sont droites.

L'ensemble de direction comprend en outre un élément fixe 4 qui est solidaire du châssis du véhicule automobile, le capteur 5 étant associé sur ledit élément de sorte que les éléments sensibles dudit capteur soient disposés en regard et à distance d'entrefer du codeur 1.

Pour pouvoir déterminer la position angulaire absolue du codeur 1, et donc du volant 2, par rapport à l'élément fixe 4, et donc au châssis, le codeur 1 comprend une piste multipolaire principale 1a et une piste multipolaire dite « top tour » 1 b qui sont concentriques. La piste top tour 1 b comprend M (avec M > 1) singularités 1 b1 réparties angulairement.

Dans un exemple particulier, le codeur 1 est formé d'un anneau magnétique multipolaire sur lequel est aimantée une pluralité de paires de pôles 1c Nord et Sud équiréparties avec une largeur angulaire constante de sorte à former les pistes principale 1a et top tour 1b, une singularité magnétique 1b1 de la piste top tour 1 b étant formée de deux pôles adjacents dont la transition magnétique est différente des autres.

Suivant la réalisation représentée sur la figure 1, les pistes principale 1a, disposée vers l'intérieur de l'anneau, et top tour 1b, disposée vers l'extérieur de l'anneau, comprennent 24 paires de pôles 1 c, les paires de pôles 1 c de la piste top tour 1b étant en retard de phase d'une valeur φ par rapport à celles de la piste principale 1a.

Chaque singularité 1b1 est formée d'une paire de pôles 1 c, la largeur des pôles étant agencée pour qu'un pôle soit déphasé de -φ par rapport au pôle correspondant de la piste principale 1a. Ainsi, chaque impulsion du signal C correspond à la détection d'une inversion de déphasage entre la piste principale 1a et la piste top tour 1b.

Par ailleurs, le capteur 5 comprend un circuit électronique pourvu d'au moins trois éléments sensibles dont au moins deux sont positionnés en regard de la piste principale 1a et au moins un est positionné en regard de la piste top tour 1 b.

Dans un exemple particulier, les éléments sensibles sont choisis dans le groupe comprenant les sondes à effet Hall, les magnétorésistances, les magnétorésistances géantes.

Le capteur 5 utilisé est apte à délivrer deux signaux électriques S1, S2 périodiques en quadrature par l'intermédiaire des éléments sensibles disposés en regard de la piste principale 1a et un signal électrique S3 par l'intermédiaire des éléments sensibles disposés en regard de la piste top tour 1b.

Le principe d'obtention des signaux S1 et S2 à partir d'une pluralité d'éléments sensibles alignés est par exemple décrit dans le document FR-2 792 403 issu de la demanderesse.

Mais des capteurs 5 comprenant deux éléments sensibles qui sont aptes à délivrer les signaux S1 et S2 sont également connus.

A partir des signaux S1, S2 et S3, le circuit électronique est apte à délivrer des signaux digitaux de position A, B carrés en quadrature et un signal top tour C sous forme de M impulsions électriques par tour du codeur 1.

Un principe d'obtention des signaux digitaux A, B et C, ainsi que différents modes de réalisation des singularités magnétiques 1b1, sont décrits dans les documents FR-2 769 088 et EP-0 871 014.

Suivant une réalisation, le circuit électronique comprend en outre un interpolateur, par exemple du type décrit dans le document FR-2 754 063 issu de la demanderesse, permettant d'augmenter la résolution des signaux de sortie. En particulier, une résolution de la position angulaire du codeur 1 inférieure à 1° peut être obtenue.

Le capteur 5 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 1 peut être formé d'une cible en métal ou en verre sur laquelle les pistes principale 1a et top tour 1b ont été gravées de sorte à former un motif optique analogue au motif magnétique multipolaire exposé ci-dessus, les éléments sensibles étant alors formés de détecteurs optiques.

Le système de détermination comprend en outre un dispositif de traitement 6 des signaux A, B, C qui comprend des moyens de comptage aptes à déterminer, à partir d'une position initiale, les variations de la position angulaire du codeur 1. Dans un exemple de réalisation, les moyens de comptage comprennent un registre dans lequel la valeur de la position angulaire est incrémentée ou décrémentée d'une valeur angulaire correspondant au nombre de fronts des signaux A et B qui sont détectés, la valeur initiale étant par exemple fixée à zéro lors de la mise en service du système. Ainsi, le dispositif de traitement permet de connaître la position relative du codeur 1 par rapport à la position initiale.

Le système de détermination comprend également un dispositif d'analyse de la vitesse différentielle des roues d'un même essieu du véhicule qui est apte à déterminer une estimation de la position angulaire absolue du volant 2 en fonction de ladite vitesse différentielle.

Pour obtenir la position angulaire absolue du volant 2, il est prévu d'utiliser un codeur 1 dont la répartition des singularités 1b1 de la piste top tour 1b est spécifique.

Dans le mode de réalisation représenté sur la figure 1, la répartition angulaire des dix singularités 1b1 de la piste top tour 1 b peut être représentée par le motif binaire 000001000110100111001011 obtenu par exploitation du signal C et des signaux A et B lors d'une rotation d'un tour, où le chiffre 1 correspond à la détection d'une impulsion top tour sur la paire de pôles correspondant à la singularité 1b1 et le chiffre 0 à l'absence de détection d'une telle impulsion.

Avec ce motif binaire, il est possible d'établir, en fonction de la position initiale du codeur 1 et du sens de rotation, le nombre d'états 0 ou 1 à lire pour déterminer de façon univoque la position absolue du codeur 1 sur un tour. Dans la suite de la description, cette succession de 0 ou 1 qui permet de déterminer une position absolue du codeur 1 sur un tour, est appelée séquence binaire unique.

Par conséquent, les M singularités 1b1 sont réparties angulairement sur le codeur 1 de sorte que le signal C soit agencé pour, en combinaison avec les signaux A et B, définir des séquences binaires uniques qui sont représentatives chacune d'une position angulaire absolue du codeur 1 sur un tour. En particulier, cette position angulaire absolue peut être définie par rapport à la position « ligne droite » du codeur (flèche 8) qui correspond à une position angulaire égale à 0°.

En variante non représentée, on peut prévoir que le motif binaire comprenne des secteurs de tour pourvus chacun de séquences binaires uniques telles que définies précédemment. Par conséquent, ces séquences binaires uniques sont représentatives chacune d'une position angulaire absolue du codeur 1 sur le secteur considéré.

Le procédé de détermination selon l'invention prévoit une procédure initiale dans laquelle on détermine au moins une estimation θ* de la position angulaire absolue du volant 2 au moyen du dispositif d'analyse.

Pour ce faire, dans l'hypothèse où le glissement entre le sol et les roues est négligeable, il existe une relation bijective entre la position angulaire θ* et la vitesse différentielle des roues. Ce glissement est particulièrement négligeable lorsque la mesure de la vitesse différentielle est effectuée sur les roues non motrices, mais également sur les roues motrices lorsque l'adhérence est normale. Selon une réalisation, la relation est identifiée à l'aide de mesures réalisées sur le véhicule dans des conditions optimales qui peuvent comprendre :
- évolution du véhicule sur une aire plane;
- vitesse du véhicule stabilisée;
- rotation lente du volant;
- pression des pneus nominale;
- sol sec.

Dans ces conditions, on peut établir la relation polynomiale, par exemple d'ordre trois, qui permet d'estimer la position angulaire θ* en fonction de la vitesse différentielle. Par utilisation de cette relation dans le dispositif d'analyse, on peut donc obtenir à chaque instant l'estimation θ* de la position angulaire θ en fonction de la vitesse différentielle mesurée. A cet effet, le dispositif d'analyse est alimenté avec respectivement les vitesses des roues gauche V_{g} et droite V_{d} d'un même essieu et comprend des moyens de calcul agencés pour fournir la vitesse différentielle.

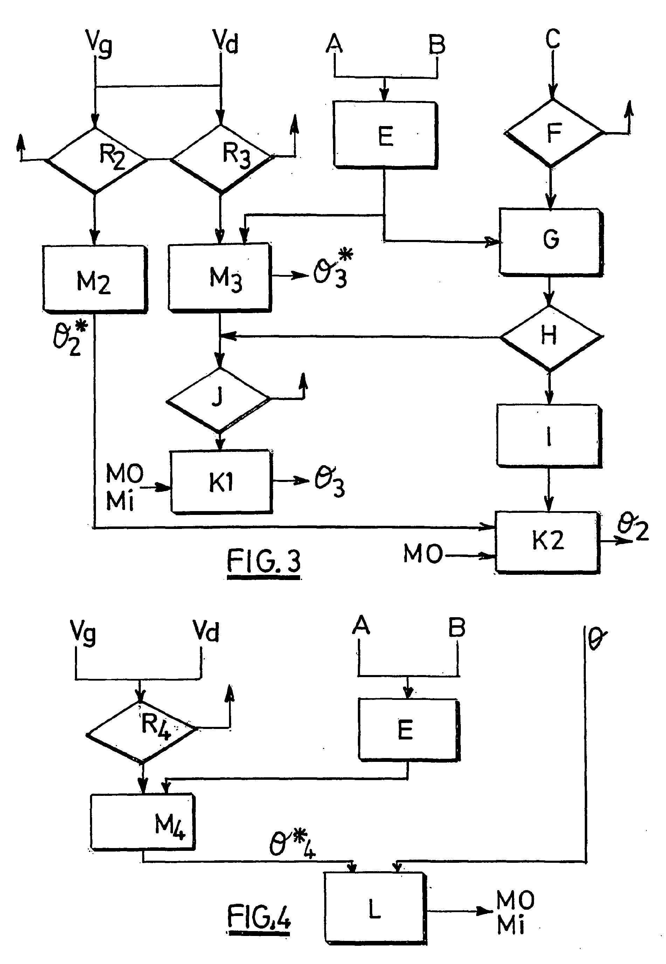

Dans l'algorithme représenté sur la figure 3, il est prévu de déterminer deux estimations : une estimation grossière θ*₂ et une estimation fine θ*₃ qui sont obtenues respectivement lorsque des conditions de roulage déterminées R₂, R₃ sont respectées. L'estimation grossière θ*₂ est typiquement utilisée pour déterminer le tour ou le secteur de tour dans lequel le volant se situe et l'estimation fine θ*₃ pour déterminer la position angulaire absolue du volant avant qu'une séquence binaire unique ne soit complètement construite. Toutefois, le procédé peut être mis en oeuvre en utilisant une seule estimation θ* dont la précision est suffisante pour déterminer les positions angulaires θ₂ et θ₃ comme décrit ci-dessous.

La procédure initiale prévoit également par comptage des variations de la position angulaire du codeur 1 (étape E) et détection des top tours (étape F), de construire la séquence binaire correspondant aux signaux A, B, C délivrés (étape G). Par exemple, en partant de la position indiquée par la flèche 7 sur la figure 1, la séquence construite est 1 puis 10 puis 100 puis 1001 puis 10011, cette dernière étant unique dans le motif binaire. La position angulaire représentée par la flèche 8 sur la figure 1 est la position angulaire absolue du codeur correspondant à cette séquence binaire unique.

Le procédé prévoit de déterminer si la séquence binaire construite est unique (test H).

Lorsque la séquence construite est unique, la position angulaire absolue du codeur est connue (étape I) et la position angulaire du volant θ₂ peut être connue (étape K₂) grâce à l'estimation θ*₂ (étape M₂) dès que celle-ci à une précision suffisante pour permettre de discriminer le tour ou éventuellement le secteur de tour sur lequel la séquence est unique. Dans l'exemple considéré ci-dessus, la séquence binaire 10011 permet de déterminer la position « ligne droite » en tant que position absolue sur le tour où la mesure est effectuée, et dès que la précision de l'estimation θ*₂ est inférieure à +/- 180° on peut discriminer la position entre -720°, -360°, 0°, 360° ou 720° (dans le cas où le volant 2 est agencé pour tourner de +/- 2 tours complets). Les conditions de roulage R₂ pour la détermination de θ*₂ sont donc prévues pour atteindre cette précision, par exemple une vitesse du véhicule supérieure à 2 km/h et un temps de déplacement supérieur à 400 ms permettent d'obtenir une précision typique de l'ordre de +/- 50°.

Dans le cas où la séquence construite n'est pas unique, le procédure initiale prévoit de tester (test J) si l'estimation θ*₃ permet de discriminer la position angulaire absolue θ₃ du volant qui correspond à la séquence binaire. Dans le cas où la séquence binaire construite est 001 qui a quatre occurrences dans le motif (-105°, -15°, 60°, 165°), une des occurrences est validé (étape K₁) dès que la précision de l'estimation θ*₃ le permet, par exemple lorsque θ*₃ = 520° +/- 15°, l'occurrence 165° est validée et θ₃ = 515°.

Dans un mode de réalisation, l'estimation fine θ*₃ est obtenue par détermination itérative de la différence moyenne entre les positions angulaires mesurées à partir des signaux A, B (étape E) et les positions angulaires calculées à partir de la vitesse différentielle des roues, et addition de ladite différence à la position angulaire mesurée à partir des signaux (A, B) (étape M₃). En effet, cette moyenne mobile point à point permet dans des conditions de roulage R₃ telles que vitesse du véhicule supérieure à 5 km/h et vitesse du volant inférieure à 20°/s, d'obtenir θ*₃ avec une précision inférieure à +/- 15° au bout de 2 secondes. Ce procédé de détermination de θ*₃ est décrit dans le document WO2004/111570 dont le principe général est rappelé ci-dessous.

Dans ce procédé, on échantillonne la position angulaire δ(tᵢ) mesurée à partir des signaux A, B ainsi que la vitesse différentielle ΔV/V(tᵢ) par exemple avec une période de l'ordre de 1 ms.

Pour chaque mesure de la vitesse différentielle ΔV/V(tᵢ), on détermine par le calcul une estimation θ*(tᵢ) de la position angulaire du volant, par exemple au moyen d'une relation bijective telle que mentionnée précédemment.

La position angulaire incrémentale δ(tᵢ) permet de connaître les variations de la position angulaire θ(tᵢ) au cours du temps, mais elle est décalée d'une valeur offset constante par rapport à ladite position angulaire absolue.

Le procédé selon ce mode de réalisation propose de calculer cette valeur en prévoyant, par exemple à chaque instant tₙ, de déterminer la différence de la moyenne des vecteurs θ̂*(*tₙ*) *=* [*θ**(*t₀*),...,θ*(*tₙ*)] et δ̂(*tₙ*) *=* [δ(*t₀*),...,δ(*tₙ*)] de sorte à obtenir la différence moyenne offset(tₙ). En effet, la valeur offset(tₙ) correspond alors au minimum de la fonction de coût θ̂(*tₙ*)-δ̂(*tₙ*)-offset*Iₙ, Iₙ étant la matrice identité de dimension n.

Ainsi, le procédé prévoit d'utiliser l'ensemble des valeurs θ*(tᵢ) et δ(tᵢ) de façon statistique de sorte à améliorer continument la précision de la moyenne offset(tₙ) puisque le nombre de valeurs utilisées augmente avec le temps. En outre, l'ensemble des perturbations affectant le calcul des estimations θ*(tᵢ), par exemple telles que les défauts de planéité du sol, pouvant être supposé centré sur zéro, le calcul statistique proposé permet de converger rapidement vers la valeur offset recherchée.

Par conséquent, par addition entre la différence moyenne offset(tₙ) et la position angulaire δ(tₙ), l'estimation θ*₃(tₙ) de la position angulaire absolue du volant 2 peut être obtenue de façon itérative, en s'affranchissant pour une grande part des défauts de la zone de roulage.

Selon une réalisation, la précision de la détermination de la position angulaire absolue peut être améliorée en prévoyant de mettre en oeuvre ce procédé dans des conditions de roulage déterminées. Par exemple, comme mentionné ci-dessus, les conditions de roulage R₃ peuvent comprendre une vitesse de rotation maximale du volant de sorte à limiter les perturbations liées au délai d'inscription du véhicule dans la trajectoire et/ou une vitesse minimale du véhicule pour permettre d'améliorer la finesse des estimations. Dans un exemple numérique, la limite de vitesse du véhicule peut être fixée à 5 km/h et celle de la vitesse du volant à 20°/s. Ainsi, si ces conditions sont remplies pendant au moins 2 secondes, pas nécessairement consécutives, on peut obtenir l'estimation θ*₃ avec une précision typique de l'ordre de +/- 5°. Cette précision peut donc être obtenue au bout de 25 m de roulage et peut s'établir à +/- 2° au bout de 50 m de roulage.

Par ailleurs, le calcul de l'estimation θ*₃ selon cette réalisation permet de s'affranchir des défauts d'indexation mécanique entre le codeur 1 et le volant 2 puisque ceux-ci sont corrigés lors du calcul de la valeur offset.

Sur la base de la procédure initiale, le procédé de détermination prévoit d'utiliser une estimation θ*, notamment θ*₃, en tant que position angulaire absolue θ avant la détermination des positions angulaires θ₂ et θ₃. Cette information, bien que moins précise, à l'avantage d'être disponible très rapidement. En outre, les conditions de roulage R₂ étant moins sévères que celles prévues en R₃, l'estimation θ*₂ sera disponible avant l'estimation θ*₃. Puis, lorsque l'une des positions angulaires θ₂ ou θ₃ est disponible, on utilise ladite position angulaire en tant que position angulaire initiale θ₀. On détermine ainsi, à partir de cette position initiale, les variations de la position angulaire absolue θ au moyen des signaux A, B de sorte à connaître, en continu, ladite position grâce aux moyens de comptage.

Le procédé prévoit donc d'utiliser la première information disponible parmi θ₂ ou θ₃, ce qui permet, dans toutes les conditions de roulage, d'obtenir rapidement une position angulaire absolue θ qui soit précise. En particulier, la position angulaire absolue du volant est disponible avant le seuil de 15 km/h au delà duquel elle est nécessaire au système de contrôle de trajectoire. En outre, il est à noter que la précision des estimations θ*₂ et θ*₃ s'améliore avec le temps de roulage et qu'elles permettent de s'affranchir pour une grande part de l'influence du profil de la route (nid de poule, bosse) sur la vitesse des roues.

De façon schématique, on peut faire ressortir deux scénarii classiques :
- le véhicule démarre, roule et le conducteur tourne suffisamment le volant : θ₂ est alors disponible avant θ₃ ;
- le véhicule démarre, roule et le conducteur tourne peu le volant (de l'ordre de +/- 7,5° par exemple) : θ₃ est alors disponible avant θ₂.

En variante, le procédé prévoit en outre, lorsque la position angulaire θ₀ est basée sur la position angulaire θ₃, de recaler les positions angulaires θ déterminées ultérieurement en fonction de la position angulaire θ₂ lorsque celle-ci est disponible de sorte à fiabiliser les positions angulaires obtenues.

La procédure initiale décrite ci-dessus est notamment destinée à être utilisée lors de l'initialisation ou de la réinitialisation du système de détermination de sorte à recaler la position angulaire relative issue des signaux A, B. En outre, cette procédure peut être utilisée de façon itérative après le recalage pour fiabiliser le procédé de détermination. Par ailleurs, on peut également prévoir que le procédé utilise d'autres estimateurs dynamiques de la position angulaire du volant, tel qu'un capteur de lacet, un accéléromètre ou un gyroscope, pour accélérer, contrôler et/ou fiabiliser les calculs réalisés.

Selon un mode de réalisation, le procédé comprend également une procédure de calibrage (voir figure 4) dans laquelle, préalablement à l'utilisation du système de détermination, la position angulaire du codeur est indexée électroniquement par rapport à la position angulaire du volant. En particulier, le décalage de la position « ligne droite » 8 du codeur par rapport à la position « ligne droite » des roues du véhicule peut être déterminé. Cette procédure permet d'annuler les erreurs de positionnement angulaire du codeur lors de son montage sur le véhicule, et donc de s'affranchir d'une indexation mécanique précise du codeur par rapport à la position angulaire des roues.

La procédure de calibration prévoit de déterminer une estimation θ*₄ de la position angulaire absolue du volant au moyen du dispositif d'analyse dans des conditions de roulage R₄ particulières qui sont plus sévères en terme de temps et de vitesses que celles utilisées pour déterminer θ*₂ et θ*₃. Par exemple, les conditions de roulage peuvent imposer une plage de position angulaire du volant autour de la position « ligne droite » (par exemple +/- 45° autour de la ligne droite). Dans ces conditions, il est possible d'obtenir, par exemple en utilisant le même procédé de calcul (étape M₄) que celui décrit ci-dessus pour déterminer θ*₃, la position angulaire θ*₄ avec une précision de +/- 2°. Par conséquent, l'estimation θ*₄ est disponible moins rapidement que les autres estimations. En variante, en fonction de la précision de calibration que l'on souhaite obtenir, l'estimation θ*₃ peut être utilisée à la place de l'estimation θ*₄.

Ensuite, on compare (étape L) l'estimation θ*₄ avec la position angulaire absolue θ déterminée par la méthode décrite ci-dessus, de sorte à en déduire le décalage angulaire M₀ entre le codeur et le volant. En effet, l'estimation θ*₄ est indépendante du montage du codeur et est fonction du cap du véhicule alors que l'angle absolue θ déterminée en fonction de θ₂ ou θ₃ dépend du montage du codeur. Par conséquent, un montage imprécis du codeur qui induit un décalage entre la position ligne droite du codeur et le cap du véhicule correspondant, typiquement mais pas limitativement compris entre +/- 15°, peut être corrigé de sorte à annuler ce décalage.

Cette indexation peut être réalisée en sortie de chaîne ou lors d'une opération de maintenance, la valeur M₀ pouvant être mémorisée de sorte à être utilisée lors de la détermination de la position angulaire initiale θ₀ pour corriger les estimations θ*₂ et θ*₃ obtenues. En variante, la procédure de calibration peut être réalisée plusieurs fois de sorte, en moyennant les valeurs de M₀ obtenues, à fiabiliser l'indexation réalisée.

Selon une réalisation, la procédure de calibration peut être effectuée de façon itérative de sorte à obtenir des décalages angulaires Mᵢ qui sont utilisée au fur et à mesure de leur obtention pour la détermination de la position angulaire initiale θ₀ de façon actualisée vis-à-vis des conditions de roulage et des caractéristiques du véhicule. Ainsi, même en cas de défaut lié à une roue ou à un train de roue (tel que variation pression du pneu, réglage train), il est possible de déterminer les angles θ₂ et θ₃ de façon fiable.

Selon un mode de réalisation, le procédé selon l'invention prévoit également de déterminer la différence entre M₀ et Mᵢ, et, si la différence est supérieure à un seuil, d'en déduire un défaut lié à une roue. En effet, si un des pneus est crevé, dégonflé ou si une roue de diamètre différent a été montée, cela se traduit par une dérive des valeurs Mᵢ et le passage de la différence |M₀ - Mᵢ| au dessus d'un seuil qui permet la détection de ces évènements. Cette détermination d'un défaut lié à une roue peut être affinée si nécessaire par filtrage des valeurs Mᵢ, détection de dérive lente ou rapide, calcul au démarrage du véhicule ou dans une phase de roulage stationnaire.

En variante, le procédé prévoit de déterminer le signe de la différence entre M₀ et Mᵢ de sorte à en déduire la roue concernée par le défaut. En particulier, en cas de crevaison, si M₀ - Mᵢ > 0 la roue droite est concernée. La roue gauche est concernée dans l'occurrence opposée.

## Revendications

1. Procédé de détermination de la position angulaire absolue θ du volant de direction (2) d'un véhicule automobile par rapport au châssis dudit véhicule, au moyen d'un système comprenant :
- un codeur (1) mis en rotation conjointement au volant (2), ledit codeur comprenant une piste multipolaire principale (1a) et une piste multipolaire dite « top tour » (1 b) qui sont concentriques, ladite piste top tour comprenant M singularités (1b1) réparties angulairement ;
- un capteur fixe (5) disposé en regard et à distance d'entrefer du codeur (1), comprenant un circuit électronique apte à délivrer deux signaux digitaux de position (A, B) carrés en quadrature qui sont représentatifs de la position angulaire du codeur (1) et un signal top tour (C) sous forme de M impulsions par tour du codeur (1), dans lequel les M singularités correspondantes (1b1) sont réparties angulairement de sorte que le signal top tour (C) soit agencé pour, en combinaison avec les signaux digitaux de position (A, B), définir un motif binaire comprenant des séquences binaires uniques sur un tour ou sur un secteur de tour qui sont représentatives chacune d'une position angulaire absolue du codeur (1) sur le tour ou sur le secteur ;
- un dispositif de traitement (6) des signaux (A, B, C) qui comprend des moyens de comptage aptes à déterminer, à partir d'une position initiale, les variations de la position angulaire du codeur (1) ;
- un dispositif d'analyse de la vitesse différentielle des roues d'un même essieu du véhicule qui est apte à déterminer une estimation de la position angulaire absolue du volant (2) en fonction de ladite vitesse différentielle ;
Ledit procédé comprenant la procédure initiale prévoyant de :
- déterminer au moins une estimation θ* de la position angulaire absolue du volant (2) au moyen du dispositif d'analyse ;
- construire la séquence binaire correspondant aux signaux (A, B, C) délivrés;
- déterminer si la séquence binaire est unique;
- si oui, tester si une estimation θ* permet de discriminer la position angulaire absolue du codeur (1) dans le cas où la séquence binaire est unique sur un secteur et de discriminer la position angulaire absolue du volant (2) θ₂ qui correspond à la séquence binaire unique ;
- si non, tester si une estimation θ* permet de discriminer la position angulaire absolue θ₃ du volant (2) qui correspond à la séquence binaire ;
Dans lequel une estimation θ* est utilisée en tant que position angulaire absolue θ avant la détermination des positions angulaires θ₂ et θ₃, puis, lorsqu'une des positions angulaires θ₂ ou θ₃ est disponible, utiliser ladite position angulaire en tant que position angulaire initiale θ₀ pour déterminer, à partir de cette position initiale, les variations de la position angulaire absolue θ au moyen des signaux digitaux de position (A, B).

2. Procédé selon la revendication 1, **caractérisé en ce qu'**il prévoit en outre, lorsque la position angulaire θ₀ est basée sur la position angulaire θ₃, de recaler les positions angulaires θ déterminées ultérieurement en fonction de la position angulaire θ₂ lorsque celle-ci est disponible.

3. Procédé selon la revendication 1 ou 2, **caractérisé en ce que** la détermination de l'estimation θ* est mise en oeuvre dans des conditions de roulage déterminées.

4. Procédé selon la revendication 3, **caractérisé en ce qu'**il prévoit de déterminer deux estimations θ*₂ et θ*₃ en fonction respectivement de conditions de roulage déterminées, l'estimation grossière θ*₂ étant utilisée pour discriminer la position angulaire θ₂ et l'estimation fine θ*₃ étant utilisée pour discriminer la position angulaire θ₃.

5. Procédé selon la revendication 4, **caractérisé en ce que** l'estimation fine θ*₃ est obtenue par détermination itérative de la différence moyenne entre les positions angulaires mesurées à partir des signaux digitaux de position (A, B) et les positions angulaires calculées à partir de la vitesse différentielle des roues, et addition de ladite différence à la position angulaire mesurée à partir des signaux digitaux de position (A, B).

6. Procédé selon l'une quelconque des revendications 1 à 5, **caractérisé en ce que** la mesure de la vitesse différentielle est effectuée sur les roues non motrices.

7. Procédé selon l'une quelconque des revendications 1 à 6, **caractérisé en ce qu'**il comprend une procédure de calibration dans laquelle, dans des conditions de roulage particulières :
- on détermine une estimation θ*₄ de la position angulaire absolue du volant (2) au moyen du dispositif d'analyse ;
- on compare l'estimation θ*₄ avec la position angulaire absolue θ déterminée de sorte à en déduire le décalage angulaire (M₀) entre le codeur (1) et le volant (2).

8. Procédé selon la revendication 7, **caractérisé en ce que** la procédure de calibration est effectuée de façon itérative de sorte à obtenir des décalages angulaires (Mᵢ).

9. Procédé selon la revendication 7 ou 8, **caractérisé en ce que** le décalage (M₀) ou les décalages (Mᵢ) sont utilisés lors de la détermination de la position angulaire initiale θ₀.

10. Procédé selon la revendication 7 ou 8, **caractérisé en ce qu'**il prévoit de déterminer la différence entre M₀ et Mᵢ, et, si la différence est supérieure à un seuil, d'en déduire un défaut lié à une roue.

11. Procédé selon la revendication 10, **caractérisé en ce qu'**il prévoit de déterminer le signe de la différence entre M₀ et Mᵢ de sorte à en déduire la roue concernée par le défaut.

## Claims

1. A method for determining the absolute angular position θ of the steering wheel (2) of a motor vehicle with respect to the frame of said vehicle, using a system comprising:
- an encoder (1) rotating simultaneously with the steering wheel (2), said encoder comprising a main multipolar track (1a) and a so-called "top tour" multipolar track (1b) which are concentric, said top tour track comprising M angularly distributed special features (1b1);
- a stationary sensor (5) positioned opposite and at an air gap distance from the encoder (1), comprising an electronic circuit capable of delivering two quadrature square position digital signals (A,B) which are representative of the angular position of the encoder (1) and a top tour signal (C) in the form of M impulsions per revolution of the encoder (1), wherein the corresponding M special features (1b1) are angularly distributed so that the top tour signal (C) is arranged for defining, together with the position digital signals (A,B), a binary pattern comprising unique binary sequences on one revolution or on one revolution sector, which are, each, representative of an absolute angular position of the encoder (1) on the revolution or on the sector;
- a device (6) for processing the signals (A,B,C), which comprises counting means capable of determining, from an initial position, the variations of the angular position of the encoder (1);
- a device for analyzing the differential speed of the wheels on the same axle of the vehicle which is capable of determining an estimation of the absolute angular position of the steering wheel (2), depending on said differential speed;
said method comprising the initial procedure which provides to:
- determine at least an estimation θ* of the absolute angular position of the steering wheel (2) using the analyzing device;
- construct the binary sequence corresponding to the delivered signals (A,B,C);
- determine whether the binary sequence is unique;
- if it is, test whether an estimation θ* makes it possible to discriminate the absolute angular position of the encoder (1) in the case where the binary sequence is unique on one sector and to discriminate the absolute angular position θ₂ of the steering wheel (2) which corresponds to the unique binary sequence;
- if it is not, test whether an estimation θ* makes it possible to discriminate the absolute angular position θ₃ of the steering wheel (2) which corresponds to the unique binary sequence;
wherein an estimation θ* is used as an absolute angular position θ prior to the determination of the angular positions θ₂ or θ₃, then, when one of the angular positions θ₂ or θ₃, is available, use said angular position as the initial angular position θ₀ to determine, from such initial position, the variations of the absolute angular position θ using the position digital signals (A,B).

2. A method according to claim 1, **characterized in that** it further provides, when the angular position θ₀ is based on the angular position θ₃, to re-lock the subsequently determined angular positions θ depending on the angular position θ₂ when the latter is available.

3. A method according to claim 1 or 2, **characterized in that** the determination of the estimation θ* is implemented under determined driving conditions.

4. A method according to claim 3, **characterized in that** it provides to determine two estimations θ*₂ and θ*₃ respectively depending on determined driving conditions, the rough estimation θ*₂ being used for discriminating the angular position θ₂ and the fine estimation θ*₃ being used for discriminating the angular position θ₃.

5. A method according to claim 4, **characterized in that** the fine estimation θ*₃ is obtained by an iterative determination of the mean difference between the angular positions measured from the position digital signals (A,B) and the angular positions computed from the wheels differential speed, and the addition of said difference to the angular position measured from the position digital signals (A, B).

6. A method according to any one of claims 1 to 5, **characterized in that** the measurement of the differential speed is performed on the non-driving wheels.

7. A method according to any one of claims 1 to 6, **characterized in that** it comprises a calibration procedure wherein, under special driving conditions:
- an estimation θ*₄ of the absolute angular position θ of the steering wheel (2) is determined using the analyzing device;
- the estimation θ*₄ is compared to the determined absolute angular position θ so as to derive the angular shift (M₀) between the encoder (1) and the steering wheel (2).

8. A method according to claim 7, **characterized in that** the calibration procedure is performed iteratively, so as to obtain angular shifts (Mᵢ).

9. A method according to claim 7 or 8, **characterized in that** the shift (M₀) or the shifts (Mᵢ) is/are used when determining the initial angular position θ₀.

10. A method according to claim 7 or 8, **characterized in that** it provides the determination of the sign of the difference between M₀ and Mᵢ, and if the difference is above a threshold, the deduction that a wheel is defective.

11. A method according to claim 10, **characterized in that** it provides the determination of the sign of the difference between M₀ and Mᵢ, so that the defective wheel can be derived therefrom.

## Patentansprüche

1. Ermittlungsverfahren der absoluten Winkelposition θ des Lenkrads (2) eines Kraftfahrzeugs in Bezug auf das Chassis des genannten Fahrzeugs, anhand eines Systems bestehend aus:
- einem gemeinsam mit dem Lenkrad (2) drehbaren Codierer (1), wobei der genannte Codierer eine mehrpolige Hauptbahn (1a) und eine "top tour" genannte mehrpolige Bahn (1b) umfasst, die konzentrisch sind, wobei die genannte "top tour" Bahn M winkelförmig verteilte Singularitäten (1b1*) aufweist;
- einem stationären Sensor (5), der gegenüber und im Abstand zum Luftspalt des Codierers (1) angeordnet ist, mit einer elektronischen Schaltung, die zwei digitale, phasenquadratische Rechteckpositionssignale (A, B) liefern kann, die die Winkelposition des Codierers (1) darstellen, sowie ein "top tour" Signal in Form von M Impulsen pro Umdrehung des Codierers (1), in dem die M entsprechenden Singularitäten (1b1) im Winkel so verteilt sind, dass das "top tour" Signal vorgesehen ist, um in Verbindung mit den digitalen Positionssignalen ein binäres Muster zu definieren, das einzige binäre Sequenzen in einer Umdrehung oder in einem Abschnitt der Drehung umfasst, die jeweils eine absolute Winkelposition des Codierers (1) in der Umdrehung oder in dem Abschnitt darstellen;
- einer Verarbeitungseinheit (6) der Signale (A, B, C), mit Zählmitteln, die ausgehend von einer Ausgangsposition die Schwankungen der Winkelposition des Codierers (1) bestimmen können;
- einer Analysevorrichtung der Differentialgeschwindigkeit der Räder einer selben Achse des Fahrzeugs, die eine Schätzung der absoluten Winkelposition des Lenkrads je nach der genannten Differentialgeschwindigkeit ermitteln kann;
wobei das genannte Verfahren die folgende Ausgangsprozedur umfasst :
- Ermittlung mindestens einer Schätzung θ* der absoluten Winkelposition des Lenkrads (2) anhand der Analysevorrichtung ;
- Ermittlung, ob die binäre Sequenz einzig ist ;
- wenn ja, Test ob eine Schätzung θ* es ermöglicht, die absolute Winkelposition des Codierers (1) in dem Fall zu diskriminieren, in dem die binäre Sequenz in einem Abschnitt einzig ist, und die absolute Winkelposition des Lenkrads (2) θ₂ zu diskriminieren, die der einigen binären Sequenz entspricht;
- wenn nicht, Test ob eine Schätzung θ* es ermöglicht, die absolute Winkelposition θ₃ des Lenkrads (2) zu diskriminieren, die der binären Sequenz entspricht;
bei dem vor der Ermittlung der Winkelpositionen θ₂ und θ₃ eine Schätzung θ* verwendet wird als absolute Winkelposition θ, und dann, wenn eine der Winkelpositionen θ₂ und θ₃ zur Verfügung steht, die genannte Winkelposition als AusgangsWinkelposition θ₀ verwendet wird, um ab dieser Ausgangsposition die Schwankungen der absoluten Winkelposition θ anhand der digitalen Positionssignale (A, B) zu ermitteln.

2. Verfahren gemäß Anspruch 1, **dadurch gekennzeichnet, dass** ferner vorgesehen ist, wenn die Winkelposition θ₀ auf der Winkelposition θ₃ beruht, die später ermittelten Winkelpositionen θ entsprechend der Winkelposition θ₂ zu verschieben, wenn diese zur Verfügung steht.

3. Verfahren gemäß Anspruch 1 oder 2, **dadurch gekennzeichnet, dass** die Ermittlung der Schätzung θ* unter bestimmten Fahrbedingungen erfolgt.

4. Verfahren gemäß Anspruch 3, **dadurch gekennzeichnet, dass** vorgesehen ist, zwei Schätzungen θ*₂ und θ*₃ entsprechend jeweils bestimmten Fahrbedingungen zu ermitteln, wobei die Grobschätzung θ*₂ verwendet wird, um die Winkelposition θ₂ zu diskriminieren, und die Feinschätzung θ*₃, um die Winkelposition θ₃ zu diskriminieren.

5. Verfahren gemäß Anspruch 4, **dadurch gekennzeichnet, dass** die Feinschätzung θ*₃ erhalten wird durch die iterative Ermittlung der mittleren Differenz zwischen den ab den digitalen Positionssignalen (A, B) gemessenen Winkelpositionen und den ab der Differentialgeschwindigkeit der Räder berechneten digitalen Winkelpositionen, und durch Addition der genannten Differenz zu der ab den digitalen Winkelpositionen (A, B) gemessenen Winkelposition.

6. Verfahren gemäß einem der Ansprüche 1 bis 5, **dadurch gekennzeichnet, dass** die Messung der Differentialgeschwindigkeit nicht an den Antriebsrädern erfolgt.

7. Verfahren gemäß einem der Ansprüche 1 bis 6, **dadurch gekennzeichnet, dass** es eine Kalibrierungsprozedur umfasst, bei der man unter besonderen Fahrbedingungen:
- anhand der Analysevorrichtung eine Schätzung θ*₄ der absoluten Winkelposition des Lenkrads (2) ermittelt ;
- die Schätzung θ*₄ mit der ermittelten absoluten Winkelposition θ vergleicht, um davon die Winkelverschiebung (M₀) zwischen dem Codierer (1) und dem Lenkrad (2) abzuleiten.

8. Verfahren gemäß Anspruch 7, **dadurch gekennzeichnet, dass** die Kalibrierungsprozedur iterativ erfolgt, um die Winkelverschiebungen (M₁) zu erhalten.

9. Verfahren gemäß Anspruch 7 oder 8, **dadurch gekennzeichnet, dass** die Verschiebung (M₀) bzw. die Verschiebungen (M₁) bei der Ermittlung der Ausgangswinkelposition θ₀ verwendet werden.

10. Verfahren gemäß Anspruch 7 oder 8, **dadurch gekennzeichnet, dass** vorgesehen ist, die Differenz zwischen M₀ und M₁ zu ermitteln und, wenn die Differenz größer ist als ein Schwellwert, einen das Rad betreffenden Fehler davon abzuleiten.

11. Verfahren gemäß Anspruch 10, **dadurch gekennzeichnet, dass** vorgesehen ist, das Zeichen der Differenz zwischen M₀ und M₁ zu ermitteln, um davon das von dem Fehler betroffene Rad abzuleiten.
